# EUROPÄISCHE PATENTSCHRIFT

(11) **EP 2 655 156 B1**
(45) Veröffentlichungstag und Bekanntmachung des Hinweises auf die Patenterteilung: **25.02.2015**
(21) Anmeldenummer: 11796703.4
(22) Anmeldetag: 14.12.2011
(51) Int. Cl.: B61B 10/02, B65G 17/48, B65G 19/02

(54) **TRANSPORTEINRICHTUNG**
TRANSPORT DEVICE
DISPOSITIF DE TRANSPORT

(30) Priorität: 21.12.2010 DE 102010063741
(43) Veröffentlichungstag der Anmeldung: 30.10.2013
(73) Patentinhaber: Robert Bosch GmbH, 70442 Stuttgart (DE)
(72) Erfinder: BAECHLE, Andreas, 79736 Rickenbach (DE)
(86) Internationale Anmeldenummer: PCT/EP2011/072785
(87) Internationale Veröffentlichungsnummer: WO 2012/084648

(56) Entgegenhaltungen:
- EP-A1- 0 254 273
- DE-A1-102006 007 822
- GB-A- 2 148 827
- US-A- 5 709 375

## Beschreibung

### Technisches Gebiet

Die Erfindung betrifft eine Einrichtung zum Transportieren von Gegenständen längs einer geschlossenen Transportbahn, mit zwei parallel und vertikal übereinander angeordneten, rohr- oder stangenförmigen Führungsschienen als Transportbahn, mit wenigstens einem Transportmodul, welches mit jeder Führungsschiene über wenigstens ein Stützrollenpaar verbunden ist, wobei die Rollen jedes Stützrollenpaares um im Wesentlichen senkrecht zu einer Führungsschienenachse liegende, einen Winkel von weniger als 180° einschliessende Rollenachsen drehbar sind und einer der Führungsschienen in einer Raststellung anliegen, und mit einem im Wesentlichen parallel zu dem Führungsschienen umlaufend angeordneten, mit dem wenigstens einen Transportmodul verbindbaren Antriebsmittel.

Die Erfindung bezieht sich auf einen Behältertransport, wie er häufig in Kartoniermaschinen eingesetzt wird. In diesen Maschinen werden Behälter unterschiedlicher Grösse bearbeitet, in der Regel geformt, befüllt, verschlossen und an weitere Produktionsmaschinen, beispielsweise an eine Palletieranlage, weitergereicht. Auf derartigen Maschinen werden die unterschiedlichsten Produkte, u. a. aus der Lebensmittel-, Pharma- und Healthcare- Industrie, verpackt. Dabei müssen sehr unterschiedliche Behältergrössen mit dem Behältertransport transportiert werden.

### Stand der Technik

EP-A-1 215 122 offenbart einen Behältertransport aus zwei parallelen Zahnriemen mit Mitnehmern, zwischen welchen die Behälter eingeklemmt und transportiert werden. Dabei müssen aufgerichtete Kartons in den Transportvorgang eingetaktet werden, was immer wieder zu Störungen führt. Wegen der regelmäßigen Teilung der Mitnehmer ist auch die Anzahl Behälter im Transport fest vorgegeben, was vor allem die Leistung bei kleinen Behältergrössen stark limitiert. Diese Art von Transport ist nur für das Befüllen der Behälter einsetzbar, da der seitliche Zugang beim Aufrichten und Verschliessen der Kartons limitiert ist.

Aus WO-A-96/07592 ist ein Kartontransport für unterschiedliche Kartongrössen mit drei parallelen Bändern mit jeweils darauf fixierten Mitnehmern bekannt. Der Transport kann in allen drei Dimensionen für unterschiedliche Kartons justiert werden. Ein wesentlicher Nachteil ist der komplexe mechanische und demzufolge kostenintensive Aufbau dieses Systems. Die feste Teilung der Behälter führt zu einem wenig flexiblen System mit einer von der Grösse der Kartons unabhängigen, festen Anzahl Behälter im Transport. Zudem werden für das Verstellen der drei Bänder gegeneinander Werkzeuge benötigt. Ebenfalls ist dadurch eine Justage bei Beginn der Produktion erneut erforderlich, was zu wesentlich längeren Zeiten für das erneute Anlaufen der Produktion führt.

Der aus WO-A-2009/077250 bekannte Behältertransport ist als horizontaler Rundlauf konzipiert, bei welchem an einer horizontal umlaufenden Kette Transportmodule fixiert sind. Kartons, welche auf diesen Transportmodulen platziert sind, werden durch die Anlage gefahren und an verschiedenen Stationen bearbeitet. Durch die am Antriebsmittel fest montierten Transportmodule kann nur ein beschränkter Formatbereich (Kartongrössen) abgedeckt werden. Die Konstruktion ist nicht geeignet, die bei häufigen Formatumstellungen zwingende Montage und Demontage der Transportmodule ohne den Einsatz von Werkzeugen durchzuführen.

Eine Einrichtung der eingangs genannten Art ist in EP-A 0 656 304 offenbart. Bei diesem Transportsystem sind mittels einer Kette angetriebene Transportmodule an zwei parallelen Führungsschienen montiert. Ein wesentlicher Nachteil dieses Systems liegt darin, dass die Transportmodule nicht einfach austauschbar sind. Die auf die Führungsschienen aufgesetzten Transportmodule werden über eine Verschraubung gesichert und müssen nach jeder Montage neu justiert werden.

### Darstellung der Erfindung

Der Erfindung liegt die Aufgabe zugrunde, für ein Transportsystem der eingangs genannten Art Transportmodule zu entwickeln, welche sehr einfach und ohne Werkzeug montiert und demontiert werden können, Fertigungstoleranzen automatisch ausgleichen und damit auch unempfindlich gegenüber Verschleiss sind. Ein weiteres Ziel der Erfindung ist der automatische Ausgleich von Ungenauigkeiten der Führungsschienen. Das erneute Anlaufen der Produktion nach dem Austausch der Transportmodule soll in möglichst kurzer Zeit erfolgen können. Deshalb sollen die Transportmodule ohne nachträgliche Justage wieder eingesetzt werden können.

Zur erfindungsgemässen Lösung der Aufgabe führt, dass die Stützrollenpaare den Führungsschienen über wenigstens ein auf die Stützrollenpaare einwirkendes, eine gerichtete Kraft erzeugendes Kraftelement kraftschlüssig anliegen und wenigstens eines von an unterschiedlichen Führungsschienen anliegenden Stützrollenpaaren gegen die Kraftwirkungsrichtung des Kraftelementes aus der Raststellung mit der Führungsschiene heraus verschiebbar ist.

Bevorzugt schliessen die Rollenachsen der Rollen der Stützrollenpaare im Wesentlichen einen Winkel von 90° ein und die Stützrollenpaare sind am Transportmodul bevorzugt um senkrecht zur Führungsschienenachse und parallel zur Vertikalachse stehende Achsen drehbar gelagert. Dabei soll unter "im Wesentlichen" eine Winkelabweichung geringer als 5°, bevorzugt geringer als 1°, verstanden werden. Die senkrecht zur Führungsschienenachse und parallel zur Vertikalachse stehende Achsen der Stützrollenpaare müssen nicht notwendigerweise in der gleichen Achse liegen, sondern können auch eine parallele Verschiebung aufweisen.

Die unterschiedlichen Führungsschienen anliegenden Stützrollenpaare sind bevorzugt zwischen den Führungsschienen angeordnet. Hierbei ist die vom Kraftelement auf eines der Stützrollenpaare einwirkende Kraft von der vom Kraftelement auf das andere Stützrollenpaar einwirkenden Kraft weg gerichtet.

Die Führungsschienen können aber auch zwischen den unterschiedlichen Führungsschienen anliegenden Stützrollenpaaren angeordnet sein. In diesem Fall ist die vom Kraftelement auf eines der Stützrollenpaare einwirkende Kraft auf die vom Kraftelement auf das andere Stützrollenpaar einwirkende Kraft hin gerichtet.

Bei einer zweckmässigen Ausführungsform weist das Transportmodul einen vertikalen Modulträger mit auf zwei Seiten angeordneten, zwei unterschiedlichen Führungsschienen zugeordneten Stützrollenpaaren auf.

Jedes der zwei unterschiedlichen Führungsschienen zugeordneten Stützrollenpaare kann über je ein Kraftelement verbunden sein. Alternativ kann der Modulträger aus zwei über ein Kraftelement verbundenen Trägerteilen bestehen.

Bevorzugt ist am Transportmodul wenigstens ein mit dem Antriebsmittel, vorzugsweise einem Zahnriemen, in Eingriff bringbarer Mitnehmernocken angeordnet.

Da in einem Kurvensegment der Abstand zwischen dem am Transportmodul befestigten Mitnehmernocken und dem Antriebsmittel kleiner ist als in einem linearen Segment, müssen die Mitnehmernocken lange genug ausgeführt sein und allenfalls das Antriebsmittel durchdringen können. Bevorzugt ist der Mitnehmernocken am Transportmodul gefedert befestigt. Damit kann der sich verändernde Abstand zwischen Transportmodul und Antriebsmittel kompensiert werden.

Der wenigstens eine Mitnehmernocken ist somit bevorzugt relativ zum Transportmodul im Wesentlichen senkrecht zum Antriebsmittel verschiebbar und mit wenigstens einem Kraftelement mit dem Antriebsmittel in Eingriff bringbar. Gegenüber einer Verschraubung der Transportmodule mit dem Antriebsmittel ermöglicht diese Ausführungsform ein einfaches, einseitiges Ausklinken oder Aushängen der Transportmodule aus dem Antriebsmittel. Bei einer Überlast kann der Nocken aus dem Antriebsmittel ausklinken. Dies kann eine Beschädigung der Mechanik verhindern.

Das umlaufend angeordnete Antriebsmittel kann beispielsweise eine umlaufende Kette, oder insbesondere ein Zahnriemen sein. Besonders bevorzugt kann das umlaufend angeordnete Antriebsmittel auch durch einen umlaufend angeordneten Stator eines Linearmotors gebildet sein. Es sind auch andere, dem Fachmann geläufige Antriebsmittel denkbar.

Unter "verbindbar" soll in diesem Zusammenhang verstanden werden, dass das Transportmittel mit dem Antriebsmittel kraft- und/oder formschlüssig verbunden werden kann. Die Verbindung kann durch eine mechanische Kupplung und/oder insbesondere durch eine magnetische Kupplung erfolgen.

Zur Kompensation des in einem Kurvensegment gegenüber einem linearen Segment eines Rundlaufs kleineren Abstandes zwischen dem wenigstens einen Mitnehmernocken und dem Antriebsmittel kann im Kurvensegment das Zentrum des Antriebsmittels zum Zentrum der Führungsschienen um ein Mass vom Kurvensegment weg verschiebbar sein. Insbesondere kann diese Verschiebung parallel zur Winkelhalbierenden oder Mittelparallelen der an das Kurvensegment anschliessenden linearen Segmente erfolgen. Eine zusätzliche Kompensation kann durch die vorstehend erwähnte, gefederte Befestigung der Mitnehmernocken am Transportmodul erfolgen. Damit kann der sich verändernde Abstand zwischen Transportmodul und Antriebsmittel optimal kompensiert werden.

Bevorzugterweise sind besagte gefederte Mitnehmernocken paarweise nebeneinander angeordnet. Die paarweise nebeneinander angeordneten Mitnehmernocken können dabei wiederum paarweise übereinander angeordnet sein, so dass insgesamt vier Mitnehmernocken angeordnet sind. Die übereinander angeordneten Mitnehmernocken können beispielsweise in zwei übereinander angeordnete Antriebsbänder, wie Zahnriemen eingreifen.

Pro Eingriffsstelle in das Antriebsmittel sind jeweils mindestens zwei, vorzugsweise genau zwei, Mitnehmernocken angeordnet. Hierdurch erreicht man einen sicheren Eingriff am gewünschten Ort am Antriebsmittel.

### Weitere Vorteile der Erfindung sind

- Durch einfachen und schnellen Austausch der Transportmodule kürzere Stillstandzeiten bei Reinigung der Module
- Kürzere Stillstandzeiten bei Formatwechsel, also Wechsel der Transportmodule auf unterschiedliche zu transportierende Behältergrössen
- Keine Werkzeuge und keine Justage bei Austausch der Transportmodule notwendig
- Kompensation von Fertigungsungenauigkeiten und Verschleiss

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung die lediglich zur Erläuterung dient und nicht einschränkend auszulegen ist. Die Zeichnung zeigt schematisch in
- Fig. 1: eine Schrägsicht auf einen Teil eines Rundlaufsystems mit einem auf Führungsschienen angeordneten Transportmodul;
- Fig. 2: einen rechtwinklig zu den Führungsschienen gelegten Schnitt durch das Rollensystem des Transportmoduls von Fig. 1;
- Fig. 3: die Schrägsicht von Fig. 1 mit dem Schnitt durch das Rollensystem gemäss Fig. 2;
- Fig. 4: eine Schrägsicht auf die Antriebsseite der Anordnung von Fig. 1;
- Fig. 5: eine Schrägsicht auf die teilweise geschnittene Mitnehmervorrichtung der Anordnung von Fig. 4;
- Fig. 6: einen rechtwinklig zu den Führungsschienen gelegten Schnitt durch ein alternatives Rollensystem des Transportmoduls gemäss Fig. 1;
- Fig. 7: eine Schrägsicht auf ein Transportmodul mit einem weiteren Rollensystem mit innen versetzten Rollen und alternativem Federsystem (Blattfeder);
- Fig. 8: eine Variante der relativen Lage der Führungsschienen zum Antriebsmittel in einem Kurvenbereich;
- Fig. 9: eine perspektivische Ansicht einer Ausführungsform von Mitnehmernocken zum Einsatz in der in den anderen Figuren gezeigten Mitnehmervorrichtung;
- Fig. 10: eine schematische Ansicht der Mitnehmernocke nach Figur 9 von oben; und
- Fig. 11: eine schematische Ansicht der Mitnehmernocke nach den Figuren 9 und 10 von oben.

### Beschreibung von Ausführungsbeispielen

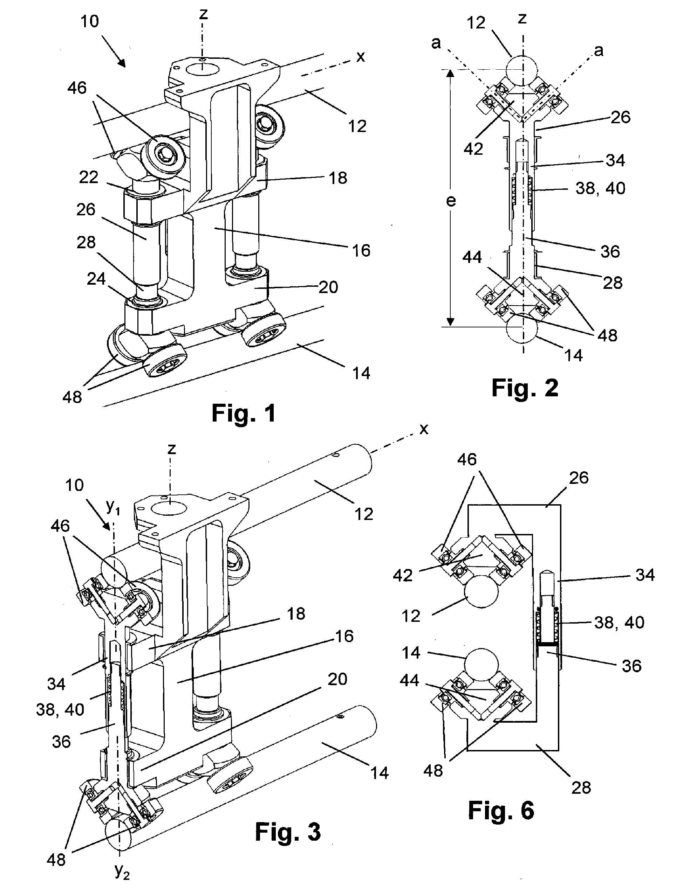

Ein in den Fig. 1 bis 5 wiedergegebenes Transportmodul 10 befindet sich im Eingriff mit zwei parallel zueinander und in vertikalem Abstand e übereinander angeordneten Führungsschienen 12, 14 eines in der Zeichnung nicht näher dargestellten Rundlaufsystems einer Verpackungsmaschine. Die Führungsschienen 12, 14 sind Stangen oder Rohre mit kreisrundem Aussenquerschnitt. Es sind auch Führungsschienen mit einem anderen, geeigneten Aussenquerschnitt denkbar. Das Transportmodul 10 weist einen zentralen, vertikal angeordneten Modulträger 16 mit von diesem paarweise seitlich und horizontal abragenden Trägerteilen 18, 20 mit zylindrischen Durchführungen 22, 24 zur Aufnahme von vertikal angeordneten, oberen und unteren Stützteilen 26, 28 für obere und untere Stützrollenpaare 46, 48 auf. Das obere Stützteil 26 übergreift mit einem abgestuften, hohlzylindrischen Schaftteil 34 ein abgestuftes, zylindrisches Schaftteil 36 des unteren Stützteils 28 unter Ausbildung eines im Querschnitt kreisringförmigen Hohlraumes 38. Im Hohlraum 38 ist eine den abgestuften Teil des zylindrischen Schaftteils 36 des unteren Stützteils 28 übergreifende Wendelfeder 40 angeordnet. Die Wendelfeder 40 liegt an einem Ende dem oberen Stützteil 26 und am anderen Ende dem unteren Stützteil 28 an. Jedes Stützteil 26, 28 endet an einem dem Schaftteil 34, 36 entgegengesetzten Ende in einem Kopfteil 42, 44 mit an diesem angeordneten, oberen und unteren Stützrollenpaar 46, 48.

Die Rollen jedes Stützrollenpaares 46, 48 sind auf in einem rechten Winkel zueinander stehenden, vom Kopfteil 42, 44 abragenden Rollenachsen a gelagert. Die Stützteile 26, 28 sind in den zylindrischen Durchführungen 22, 24 in den horizontal abragenden Trägerteilen 18, 20 und auch relativ zueinander um eine Vertikalachse z drehbar gelagert.

In eingesetzter Lage des Transportmoduls 10 sind die Rollen jedes Stützrollenpaares 46, 48 zwischen den beiden Führungsschienen 12, 14 angeordnet und liegen den Führungsschienen 12, 14 von innen an. Der Durchmesser und die räumliche Lage der Rollen der Stützrollenpaare 46, 48 sind so auf den Aussendurchmesser der Führungsschienen 12, 14 abgestimmt, dass die Laufflächen der Rollen der Stützrollenpaare 46, 48 senkrecht auf einer Durchmesserebene der Führungsschienen 12, 14 stehen. Die Wendelfeder 40 ist mit einer ausreichenden Kraft auf Druck vorgespannt, so dass das Transportmodul 10 von den zwischen den Führungsschienen 12, 14 angeordneten Stützrollenpaaren 46, 48 einerseits stabil genug zwischen den Führungsschienen 12, 14 gehalten und gegen unbeabsichtigtes Ausklinken gesichert ist, und andererseits ohne übermässigen Kraftaufwand von Hand zwischen die Führungsschienen 12, 14 eingeklinkt und von diesen wieder entfernt werden kann, indem man das Transportmodul anhebt und von unten aus den Führungsschienen herausdreht.

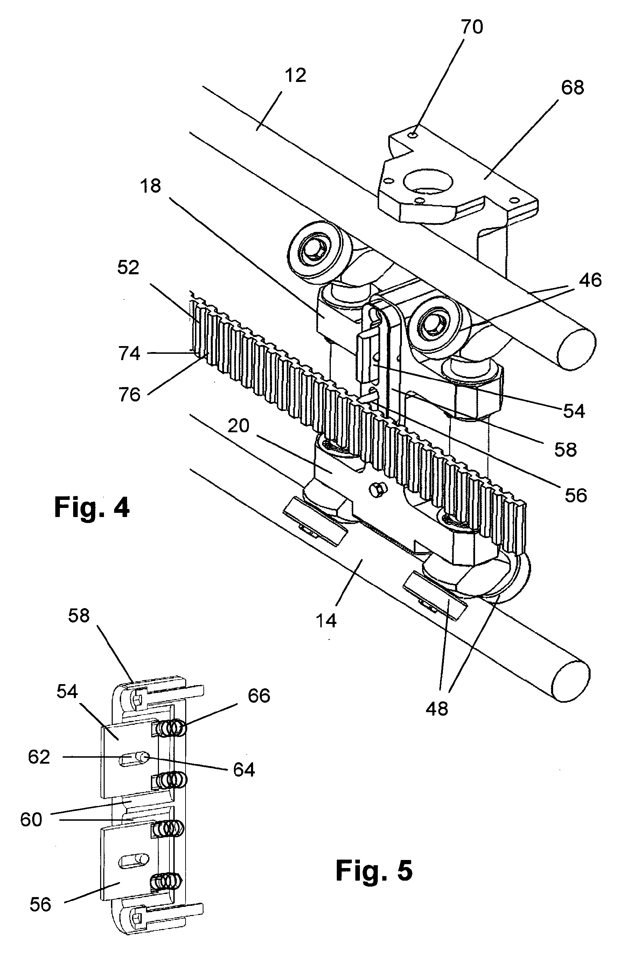

Für die Fortbewegung des Transportmoduls 10 ist gemäss Fig. 4 ein parallel zu den Führungsschienen 12, 14 angeordneter, mit einem in der Zeichnung nicht dargestellten Antrieb verbundener Zahnriemen 52 vorgesehen. Am Modulträger 16 sind zwei vertikal übereinander angeordnete Mitnehmernocken 54, 56 angeordnet. Im gezeigten Beispiel steht der untere Mitnehmernocken 56 im Eingriff mit dem Zahnriemen 52. Der obere Mitnehmernocken 54 ist für einen Eingriff mit einem zweiten, in der Zeichnung nicht dargestellten Zahnriemen vorgesehen und kommt beispielsweise dann zum Einsatz, wenn an einer Stelle des Rundlaufsystems die Transportgeschwindigkeit des Transportmoduls 10 verändert werden soll, was mittels des gegenüber dem ersten Zahnriemen 52 beispielsweise langsamer laufenden zweiten Zahnriemens erfolgen kann.

Die Mitnehmernocken 54, 56 sind in einem am Modulträger 16 festgelegten, mit Öffnungsschlitzen 60 versehenen Gehäuse 58 angeordnet. Die Mitnehmernocken 54, 56 weisen ein horizontal verlaufendes Langloch 62 auf, in welches ein am Gehäuse 58 festgelegter Stiftbolzen 64 eingreift. Zwischen der Rückwand des Gehäuses 58 und der Rückseite der Mitnehmernocken 54, 56 sind auf Druck vorgespannte Wendelfedern 66 angeordnet, welche die Mitnehmernocken 54, 56 vom Modulträger 16 weg in Richtung des Zahnriemens 52 drücken (Fig. 5).

Der Zahnriemen 52 ist gegenüber den Führungsschienen 12, 14 so angeordnet, dass der Mitnehmernocken 54 immer im Eingriff mit dem Zahnriemen 52 ist, wobei die Distanz zwischen dem Zahnriemen 52 und dem Transportmodul 10 so eingestellt wird, dass der Mitnehmernocken 54 während des Eingriffs im Zahnriemen 52 über das gesamten Rundlaufsystem innerhalb des durch die Endanschläge des Langlochs 62 vorgegebenen Toleranzbereichs liegt.

Bei der in Fig. 6 dargestellten Variante zu dem in Fig. 2 gezeigten Rollensystem für ein Transportmodul 10 gemäss Fig. 1 sind die Führungsschienen 12, 14 zwischen den Rollen jedes Stützrollenpaares 46, 48 angeordnet und liegen in eingesetzter Lage des Transportmoduls 10 den Führungsschienen 12, 14 von aussen an. Wie bei der in Fig. 2 gezeigten Ausführungsform sind auch hier der Durchmesser und die räumliche Lage der Rollen der Stützrollenpaare 46, 48 so auf den Aussendurchmesser der Führungsschienen 12, 14 abgestimmt, dass die Laufflächen der Rollen der Stützrollenpaare 46, 48 senkrecht auf einer Durchmesserebene der Führungsschienen 12, 14 stehen. Die Wendelfeder 40 ist hier an einem Ende mit dem oberen Stützteil 26 und am anderen Ende mit dem unteren Stützteil 28 verbunden und mit einer ausreichenden Kraft auf Zug vorgespannt, so dass das Transportmodul 10 von den Stützrollenpaaren 46, 48 mit den zwischen diesen angeordneten Führungsschienen 12, 14 einerseits stabil genug auf den Führungsschienen 12, 14 gehalten und gegen unbeabsichtigtes Ausklinken gesichert ist, und andererseits ohne übermässigen Kraftaufwand von Hand über die Führungsschienen 12, 14 geklinkt und von diesen entfernt werden kann.

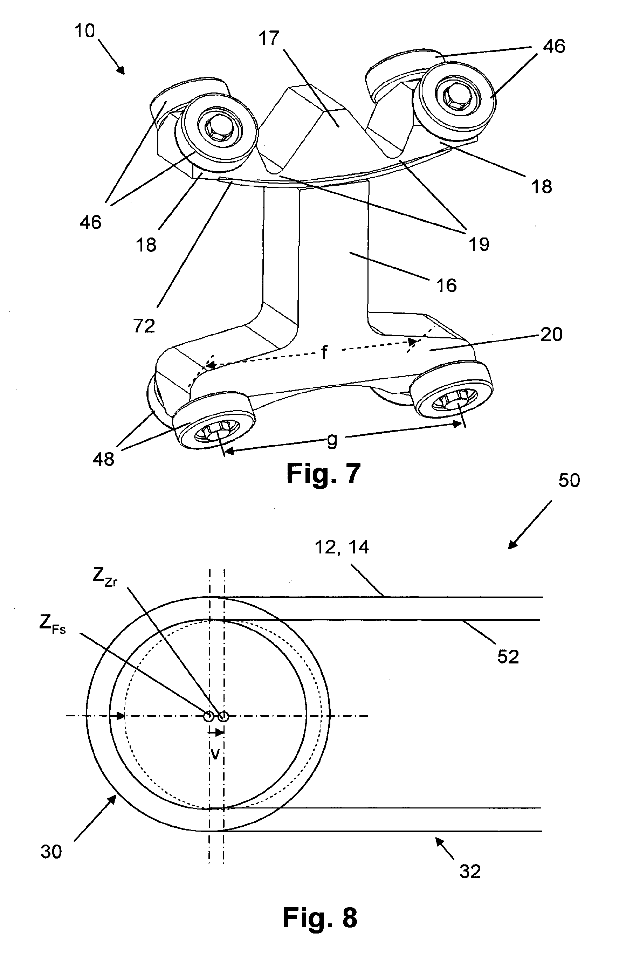

Bei dem in Fig. 7 dargestellten Transportmodul 10 sind die unteren Stützrollenpaare 48 fest an den unteren Trägerteilen 20 des Modulträgers 16 montiert. Der Abstand f der inneren Rollen kann gegenüber dem Abstand g der äusseren Rollen verkleinert werden. Damit sind die Rollenpaare bei fester Anordnung am unteren Trägerteil 20 auch in Kurvensegmenten gut geführt. Die oberen Trägerteile 18 sind aus einem elastischen Material gefertigt und weisen gegenüber einem Mittelteil 17 einen Bereich 19 geringerer Materialdicke. Die Federwirkung wird durch das elastische Material erzeugt. Alternativ ist es auch möglich, die Federwirkung durch ein unterstützendes elastisches Element zu erzeugen. Die oberen Trägerteile 18 sind über den Mittelteil 17 am Modulträger 16 festgelegt und mit einem Federblech 72 unterlegt. In eingesetzter Lage des Transportmoduls 10 ist das Federblech 72 mit einer ausreichenden Kraft auf Druck vorgespannt, so dass das Transportmodul 10 von den zwischen den Führungsschienen 12, 14 angeordneten Stützrollenpaaren 46, 48 einerseits stabil genug zwischen den Führungsschienen 12, 14 gehalten und gegen unbeabsichtigtes Ausklinken gesichert ist, und andererseits ohne übermässigen Kraftaufwand von Hand zwischen die Führungsschienen 12, 14 eingeklinkt und von diesen entfernt werden kann.

In einem Kurvensegment 30 eines Rundlaufsystems 50 ist der Abstand zwischen dem am Transportmodul 10 befestigten Mitnehmernocken 56 und dem Zahnriemen 52 kleiner als in einem linearen Segment 32. Da der Mitnehmernocken 56 am Transportmodul 10 gefedert befestigt ist, wird der sich verändernde Abstand zwischen Transportmodul 10 und Zahnriemen 52 laufend kompensiert. Um diesen Kompensationsweg in Grenzen zu halten und eine negative Auswirkung auf die Genauigkeit des Systems wegen der vergrösserten Hebelwirkung eines zu langen Mitnehmernockens zu minimieren, kann im Kurvensegment 30 das Zentrum Z_{Zr} des Zahnriemens 52 zum Zentrum Z_{Fs} der Führungsschienen 12, 14 gemäss Fig. 8 parallel zu einem angrenzenden linearen Segment 32 um ein bestimmtes Verschiebungsmass v vom Kurvensegment 30 weg verschoben sein. Dadurch ist der Abstand des Transportmoduls 10 zum Zahnriemen 52 im Kurvensegment 30 des Rundlaufsystems 50 annähernd gleich dem Abstand des Transportmoduls 10 zum Zahnriemen 52 im linearen Segment 32.

In Abhängigkeit von der Art, der Gestalt, der Grösse und gegebenenfalls weiteren Parametern der für den Transport vorgesehenen Gegenständen wird am Transportmodul eine entsprechende Aufnahme montiert. Bei dem in der Zeichnung dargestellten Transportmodul 10 ist für die Montage einer Aufnahme am zentralen Modulträger 16 eine mit Bohrungen 70 versehene Befestigungsplatte 68 vorgesehen.

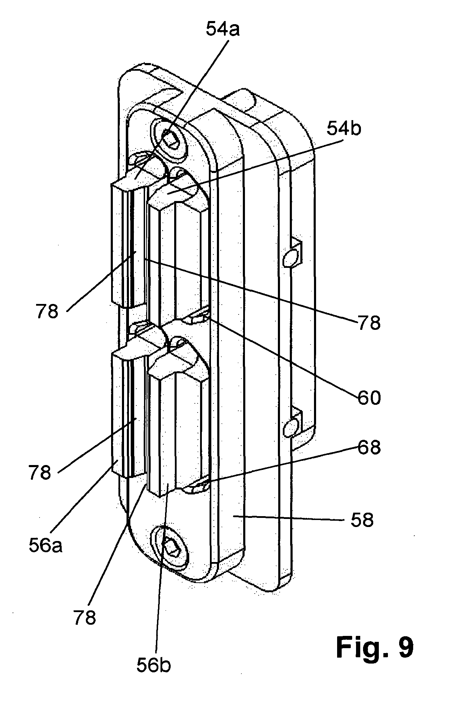

Unter Bezugnahme auf die Figuren 9 bis 11 wird eine besonders vorteilhafte Ausbildung der Mitnehmernocken 54, 56 gezeigt. Die Mitnehmernocken 54, 56 sind hier paarweise nebeneinander angeordnet. Man kann also sagen, dass pro Eingriffsstelle mit dem Antriebsmittel, hier mit dem Zahnriemen 52, die Mitnehmernocken paarweise angeordnet sind. Jedes der Mitnehmernockenpaare 54, 56 umfasst dabei zwei nebeneinander angeordnete Mitnehmernocken 54a, 54b und 56a, 56 b. Prinzipiell weisen die in diesen Figuren gezeigten Mitnehmernocken die gleichen Eigenschaft auf, wie die in den vorhergehenden Figuren gezeigten Mitnehmernocken, insbesondere die in den Figur 4 und 5 gezeigten Mitnehmernocken.

Bei Anwendungen, wo die Transportmodule von einem Zahnriemen 52 zum nächsten übergeben werden, können mit nur einem einzigen Mitnehmernocken Probleme entstehen. Wird bei nur einem Mitnehmernocken die Zahnlücke des nachfolgenden Zahnriemens verfehlt, steht der Mitnehmernocken auf dem Zahn des Zahnriemens auf und kann verrutschen, da er nicht richtig fixiert ist. Bei vielen Anwendungen ist dies unkritisch. Gerade aber wenn hohe Genauigkeit und Prozesssicherheit gefordert ist, ist die paarweise Anordnung aber vorteilhaft. Die paarweise angeordneten Mitnehmernocken 54a, 54b bzw. 56a, 56b haben den Vorteil, dass ein besonders guter und vor allem genauer Eingriff in eine bestimmte Zahnlücke 74 bzw. ein bestimmtes Zahnlückenpaar 74 eines Zahnriemens 52 bereitgestellt werden kann. Mit anderen Worten ausgedrückt: Bevorzugt wird eine Anordnung mit zwei Mitnehmernocken 54a, 54b bzw. 56a, 56b, die unabhängig voneinander mit Federmittel bzw. Wendelfedern 66 gefedert sind.

Von den Figuren wird der Aufbau des Antriebsmittels in der Gestalt eines Zahnriemens klar, dass der Zahnriemen eine Vielzahl von sich abwechselnden Zahnlücken 74 und Zähne 76 aufweist. Jeweils zwei benachbarte Zähne 76 begrenzen dabei eine Zahnlücke 74.

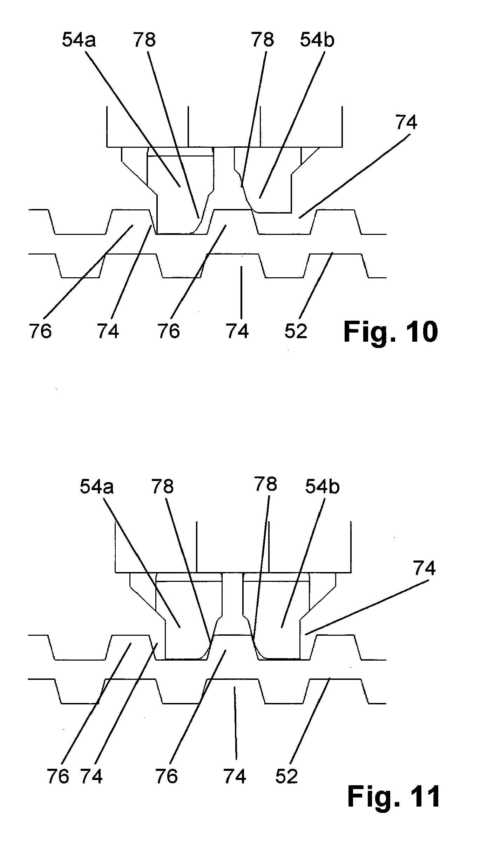

Vorteilhaft ist eine Ausführung, bei der der Mitnehmernocken 54a, 54b bzw. 56a, 56b schmäler ist als die Zahnlücke 74 des Zahnriemens in Laufrichtung gesehen. Damit ist sichergestellt, dass auch bei grösseren Ungenauigkeiten (während der Übergabe eines Transportmoduls), mindestens eine der beiden Mitnehmernocken sicher in der Verzahnung bzw. der Zahnlücke 74 des Zahnriemens 52 eingerastet ist und des Transportmoduls somit eindeutig positioniert ist. Dies kann gut in der Figur 10 erkannt werden, wobei hier die Mitnehmernocke 54a mit dem Zahnriemen 52 in Verbindung steht. Die Mitnehmernocke 54b steht dabei am Zahn 76 des Zahnriemens 52 an. Dennoch wird hier gewährleistet, dass eine der beiden Mitnehmernocken, hier die Nocke 54a in die entsprechende Zahnlücke 74 eingreift und somit eine Kraftübertragung von Zahnriemen 52 auf die Mitnehmernocken stattfinden kann.

Wie in der Figur 9 gezeigt, können die paarweise nebeneinander angeordneten Mitnehmernocken 54a, 54b, 56a, 56b dabei wiederum paarweise übereinander angeordnet sein, so dass insgesamt vier Mitnehmernocken 54a, 54b, 56a, 56b angeordnet sind.

Weiter weisen die Mitnehmernocken 54a, 54b bzw. 56a, 56b mindestens je eine Anschrägung 78 auf. Die Anschrägung 78 hilft dabei bei der Positionierung der entsprechenden Nocke. Weiter wird durch das Federmittel 66 eine Kraft von der am Zahn 76 anstehenden Nocke, hier die Nocke 54b, bereitgestellt, so dass sich die Mitnehmernocken 54a, 54b bzw. 56a, 56b relativ zum Zahnriemen 52 verschieben, wodurch sichergestellt werden kann, dass die beiden paarweise und benachbart zueinander angeordneten Mitnehmernocken 54a, 54b bzw. 56a, 56b in die entsprechenden Zahnlücken 74 eingreifen können. Dies wird in der Figur 11 gezeigt. Mit anderen Worten kann gesagt werden, dass durch die Anschrägung 78 an der sich noch nicht mit dem Zahnriemen 52 im Eingriff befindlichen Mitnehmernocke 54b, sich das Transportmodul in die richtige Position auf dem Zahnriemen drückt, so dass beide Mitnehmernocken 54a und 54b in die entsprechende Zahnlücke 74 des Zahnriemens 52 einragen.

Die paarweise angeordneten Mitnehmernocken 54a, 54b, 56a und 56b sind in einem am Modulträger 16 festgelegten, mit Öffnungsschlitzen 60 versehenen Gehäuse 58 angeordnet. Wie von der Figur 5 erkennbar ist, weisen die Mitnehmernocken 54, 56 ein horizontal verlaufendes Langloch 62 auf, in welches ein am Gehäuse 58 festgelegter Stiftbolzen 64 eingreift. Zwischen der Rückwand des Gehäuses 58 und der Rückseite der Mitnehmernocken 54, 56 sind auf Druck vorgespannte Wendelfedern 66 angeordnet, welche die Mitnehmernocken 54, 56 vom Modulträger 16 weg in Richtung des Zahnriemens 52 drücken (Fig. 5).

Vorteilhafterweise sind die Mitnehmernocken 54a, 54b, 56a und 56b schmaler ausgebildet als die Zahnlücke 74. Wenn nun also die Mitnehmernocke 54a, 54b, 56a und 56b in die Zahnlücke 74 einragen, so ist zwischen der Mitnehmernocke 54a, 54b, 56a, 56b Spiel vorhanden. Dies wird in der Figur 10 und 11 entsprechend gezeigt. Vorzugsweise sind die Mitnehmernocken 54a, 54b, 56a und 56b im Bereich des Eingriffsbereichs, also im vordersten Bereich, schmaler ausgebildet, als die Zahnlücke 74. Die schmalere Ausbildung hat den Vorteil, dass die Mitnehmernocke 54a, 54b, 56a und 56b beim Einfahren in die Zahnlücke nicht auf dem Zahn aufstehen kann, wenn die Lücke nicht exakt getroffen wird.

## Patentansprüche

1. Einrichtung zum Transportieren von Gegenständen längs einer geschlossenen Transportbahn, mit zwei parallel und vertikal übereinander angeordneten, rohr- oder stangenförmigen Führungsschienen (12, 14) als Transportbahn, mit wenigstens einem Transportmodul (10), welches mit jeder Führungsschiene (12, 14) über wenigstens ein Stützrollenpaar (46, 48) verbunden ist, wobei die Rollen jedes Stützrollenpaares (46, 48) um im Wesentlichen senkrecht zu einer Führungsschienenachse (x) liegende, einen Winkel von weniger als 180° einschliessende Rollenachsen (a) drehbar sind und einer der Führungsschienen (12, 14) in einer Raststellung anliegen, und mit einem im Wesentlichen parallel zu dem Führungsschienen (12, 14) umlaufend angeordneten, mit dem wenigstens einen Transportmodul (10) verbindbaren Antriebsmittel (52),
**dadurch gekennzeichnet, dass**
die Stützrollenpaare (46, 48) den Führungsschienen (12, 14) über wenigstens ein auf die Stützrollenpaare (46, 48) einwirkendes, eine gerichtete Kraft erzeugendes Kraftelement (40) kraftschlüssig anliegen und wenigstens eines von unterschiedlichen Führungsschienen (12, 14) anliegenden Stützrollenpaaren (46, 48) gegen die Kraftwirkungsrichtung des Kraftelementes (40) aus der Raststellung mit der Führungsschiene (46, 48) heraus verschiebbar ist.

2. Einrichtung nach Anspruch 1, **dadurch gekennzeichnet, dass** die Rollenachsen (a) der Rollen der Stützrollenpaare (46, 48) im Wesentlichen einen Winkel von 90° einschliessen.

3. Einrichtung nach Anspruch 1 oder 2, **dadurch gekennzeichnet, dass** die Stützrollenpaare (46, 48) am Transportmodul (10) jeweils um senkrecht zur Führungsschienenachse (x) und parallel zur Vertikalachse (z) stehende Achsen (y₁, y₂) drehbar gelagert sind.

4. Einrichtung nach einem der Ansprüche 1 bis 3, **dadurch gekennzeichnet, dass** die unterschiedlichen Führungsschienen (12, 14) anliegenden Stützrollenpaare (46, 48) zwischen den Führungsschienen (12, 14) angeordnet sind, wobei die vom Kraftelement (40) auf eines der Stützrollenpaare (46, 48) einwirkende Kraft von der vom Kraftelement (40) auf das andere Stützrollenpaar (46, 48) einwirkenden Kraft weg gerichtet ist.

5. Einrichtung nach einem der Ansprüche 1 bis 3, **dadurch gekennzeichnet, dass** die Führungsschienen (12, 14) zwischen den unterschiedlichen Führungsschienen (12, 14) anliegenden Stützrollenpaaren (46, 48) angeordnet sind, wobei die vom Kraftelement (40) auf eines der Stützrollenpaare (46, 48) einwirkende Kraft auf die vom Kraftelement (40) auf das andere Stützrollenpaar (46, 48) einwirkende Kraft hin gerichtet ist.

6. Einrichtung nach Anspruch 4 oder 5, **dadurch gekennzeichnet, dass** das Transportmodul (10) einen vertikalen Modulträger (16) mit auf zwei Seiten angeordneten, zwei unterschiedlichen Führungsschienen (12, 14) zugeordneten Stützrollenpaaren (46, 48) aufweist.

7. Einrichtung nach Anspruch 6, **dadurch gekennzeichnet, dass** jedes der zwei unterschiedlichen Führungsschienen (12, 14) zugeordneten Stützrollenpaare (46, 48) über je ein Kraftelement (40) verbunden ist.

8. Einrichtung nach Anspruch 6, **dadurch gekennzeichnet, dass** der Modulträger (16) aus zwei über ein Kraftelement (40) verbundenen Trägerteilen besteht.

9. Einrichtung nach einem der Ansprüche 1 bis 8, **dadurch gekennzeichnet, dass** am Transportmodul (10) wenigstens ein mit dem Antriebsmittel (52), vorzugsweise einem Zahnriemen, in Eingriff bringbarer, vorzugsweise gefederter Mitnehmernocken (54, 56) angeordnet ist.

10. Einrichtung nach Anspruch 9, **dadurch gekennzeichnet, dass** der wenigstens eine Mitnehmernocken (54, 56) relativ zum Transportmodul (10) im Wesentlichen senkrecht zum Antriebsmittel (52) verschiebbar und mit wenigstens einem Kraftelement (66) mit dem Antriebsmittel (52) in Eingriff bringbar ist.

11. Einrichtung nach Anspruch 9 oder 10, **dadurch gekennzeichnet, dass** zur Kompensation des in einem Kurvensegment (30) gegenüber einem linearen Segment (32) eines Rundlaufs (50) kleineren Abstandes zwischen dem wenigstens einen Mitnehmernocken (54, 56) und dem Antriebsmittel (52) im Kurvensegment 30 das Zentrum (Z_{Zr}) des Antriebsmittels (52) zum Zentrum (Z_{Fs}) der Führungsschienen (12, 14), insbesondere parallel zur Winkelhalbierenden oder Mittelparallelen der an das Kurvensegment (30) anschliessenden linearen Segmente (32), um ein Mass (v) vom Kurvensegment (30) weg verschiebbar ist.

12. Einrichtung nach einem der Ansprüche 9 bis 11, **dadurch gekennzeichnet, dass** besagte gefederte Mitnehmernocken (54, 56) paarweise nebeneinander angeordnet sind.

13. Einrichtung nach einem der Ansprüche 9 bis 11, **dadurch gekennzeichnet, dass** pro Eingriffsstelle in das Antriebsmittel (52) jeweils mindestens zwei, vorzugsweise genau zwei, Mitnehmernocken (54a, 54b; 56a, 56b) angeordnet sind.

14. Einrichtung nach einem der Ansprüche 9 bis 13, **dadurch gekennzeichnet, dass** die Mitnehmernocken (54a, 54b; 56a, 56b) eine Anschrägung (78) zur erleichterten Positionierung der Mitnehmernocke (54, 56) bezüglich des Antriebsmittels (52) aufweisen.

15. Einrichtung nach einem der Ansprüche 9 bis 13, **dadurch gekennzeichnet, dass** die Mitnehmernocken (54a, 54b; 56a, 56b) schmaler ausgebildet sind als die Zahnlücke (74), so dass wenn die Mitnehmernocken (54a, 54b; 56a, 56b) in Zahnlücke (74) einragen, jeweils Spiel zwischen Mitnehmernocke (54a, 54b; 56a, 56b) und Zahn vorhanden ist, und sobald beide Mitnehmernocken korrekt im Eingriff sind, die Position fixiert ist.

## Claims

1. Device for transporting objects along a closed transport path, having two tubular or rod-like guide rails (12, 14) which are arranged parallel and vertically one above the other as a transport path, having at least one transport module (10), which is connected to each guide rail (12, 14) by means of at least one support roller pair (46, 48), wherein the rollers of each support roller pair (46, 48) are able to be rotated about roller axes (a) which are substantially perpendicular relative to a guide rail axis (x) and which form an angle of less than 180° and abut one of the guide rails (12, 14) in a locking position, and having a drive means (52) which is arranged so as to extend substantially parallel with the guide rails (12, 14) and which can be connected to the at least one transport module (10),
**characterized in that**
the support roller pairs (46, 48) are in non-positive-locking abutment with the guide rails (12, 14) by means of at least one force element (40) which acts on the support roller pairs (46, 48) and which produces a directed force and at least one of the support roller pairs (46, 48) in abutment with various guide rails (12, 14) can be moved from the locking position with the guide rail (12, 14) counter to the direction of action of the force of the force element (40).

2. Device according to Claim 1, **characterized in that** the roller axes (a) of the rollers of the support roller pairs (46, 48) substantially form an angle of 90°.

3. Device according to Claim 1 or 2, **characterized in that** the support roller pairs (46, 48) are supported on the transport module (10) rotatably about axes (y₁, y₂) which are perpendicular relative to the guide rail axis (x) and parallel with the vertical axis (z).

4. Device according to one of Claims 1 to 3, **characterized in that** the support roller pairs (46, 48) which abut various guide rails (12, 14) are arranged between the guide rails (12, 14), wherein the force which is applied to one of the support roller pairs (46, 48) by the force element (40) is directed away from the force applied to the other support roller pair (46, 48) by the force element (40).

5. Device according to one of Claims 1 to 3, **characterized in that** the guide rails (12, 14) are arranged between the support roller pairs (46, 48) which are in abutment with different guide rails (12, 14), wherein the force applied to one of the support roller pairs (46, 48) by the force element (40) is directed towards the force applied to the other support roller pair (46, 48) by the force element (40).

6. Device according to Claim 4 or 5, **characterized in that** the transport module (10) has a vertical module carrier (16) having support roller pairs (46, 48) which are arranged at two sides and which are associated with two different guide rails (12, 14).

7. Device according to Claim 6, **characterized in that** each of the support roller pairs (46, 48) which are associated with two different guide rails (12, 14) is connected by means of a force element (40).

8. Device according to Claim 6, **characterized in that** the module carrier (16) comprises two carrier portions which are connected by means of a force element (40).

9. Device according to one of Claims 1 to 8, **characterized in that** there is arranged on the transport module (10) at least one carrier cam (54, 56) which is preferably resilient and which can be brought into engagement with the drive means (52), preferably a toothed belt.

10. Device according to Claim 9, **characterized in that** the at least one carrier cam (54, 56) can be displaced relative to the transport module (10) in a substantially perpendicular manner relative to the drive means (52) and can be brought into engagement with the drive means (52) by means of at least one force element (66).

11. Device according to Claim 9 or 10, **characterized in that**, in order to compensate for the smaller spacing between the at least one carrier cam (54, 56) and the drive means (52) in a curved segment (30) with respect to a linear segment (32) of a rotary system (50), in the curved segment (30) the centre (Z_{Zr}) of the drive means (52) can be displaced away from the curved segment (30) by an extent (v) relative to the centre (Z_{Fs}) of the guide rails (12, 14), in particular parallel with the angle bisector or centre parallel line of the linear segments (32) adjoining the curved segment (30).

12. Device according to one of Claims 9 to 11, **characterized in that** the said resilient carrier cams (54, 56) are arranged beside each other in pairs.

13. Device according to one of Claims 9 to 11, **characterized in that** at least two, preferably precisely two, carrier cams (54a, 54b; 56a, 56b) are provided for each engagement location in the drive means (52).

14. Device according to one of Claims 9 to 13, **characterized in that** the carrier cams (54a, 54b; 56a, 56b) have a chamfered portion (78) for facilitated positioning of the carrier cams (54, 56) relative to the drive means (52).

15. Device according to one of Claims 9 to 13, **characterized in that** the carrier cams (54a, 54b; 56a, 56b) are constructed so as to be narrower than the tooth gap (74) so that, when the carrier cams (54a, 54b; 56a, 56b) protrude into a tooth gap (74), there is play between the carrier cam (54a, 54b; 56a, 56b) and the tooth, and as soon as both carrier cams are correctly in engagement, the position is fixed.

## Revendications

1. Dispositif de transport pour le transport d'objets le long d'une bande de transport fermée, comprenant deux rails de guidage (12, 14) en forme de tube ou de barre disposés parallèlement et verticalement l'un au-dessus de l'autre, en tant que bande de transport, comprenant au moins un module de transport (10) qui est connecté à chaque rail de guidage (12, 14) par le biais d'au moins une paire de galets de support (46, 48), les galets de chaque paire de galets de support (46, 48) pouvant tourner autour d'axes de galets (a) disposés essentiellement perpendiculairement à un axe des rails de guidage (x), formant un angle inférieur à 180° et s'appliquant contre l'un des rails de guidage (12, 14) dans une position d'encliquetage, et comprenant un moyen d'entraînement (52) disposé de manière à tourner essentiellement parallèlement aux rails de guidage (12, 14), pouvant être connecté à l'au moins un module de transport (10),
**caractérisé en ce que**
les paires de galets de support (46, 48) s'appliquent par engagement par force contre les rails de guidage (12, 14) par le biais d'au moins un élément de force (40) agissant sur les paires de galets de support (46, 48) et générant une force orientée et au moins l'une de paires de galets de support (46, 48) s'appliquant contre des rails de guidage différents (12, 14) pouvant être déplacée à l'encontre de la direction d'action de force de l'élément de force (40) hors de la position d'encliquetage avec le rail de guidage (12, 14).

2. Dispositif selon la revendication 1, **caractérisé en ce que** les axes de galets (a) des galets des paires de galets de support (46, 48) forment essentiellement un angle de 90°.

3. Dispositif selon la revendication 1 ou 2, **caractérisé en ce que** les paires de galets de support (46, 48) sont supportés de manière rotative à chaque fois autour d'axes (y₁, y₂) disposés perpendiculairement à l'axe des rails de guidage (x) et parallèlement à l'axe vertical (z) sur le module de transport (10).

4. Dispositif selon l'une quelconque des revendications 1 à 3, **caractérisé en ce que** les paires de galets de support (46, 48) s'appliquant contre des rails de guidage différents (12, 14) sont disposées entre les rails de guidage (12, 14), la force agissant à partir de l'élément de force (40) sur l'une des paires de galets de support (46, 48) étant orientée à l'opposé de la force agissant à partir de l'élément de force (40) sur l'autre paire de galets de guidage (46, 48).

5. Dispositif selon l'une quelconque des revendications 1 à 3, **caractérisé en ce que** les rails de guidage (12, 14) sont disposés entre les paires de galets de support (46, 48) s'appliquant contre des rails de guidage différents (12, 14), la force agissant à partir de l'élément de force (40) sur l'une des paires de galets de support (46, 48) étant orientée vers la force agissant à partir de l'élément de force (40) sur l'autre paire de galets de support (46, 48).

6. Dispositif selon la revendication 4 ou 5, **caractérisé en ce que** le module de transport (10) présente un support de module vertical (16) avec des paires de galets de support (46, 48) disposées des deux côtés, associées à deux rails de guidage différents (12, 14).

7. Dispositif selon la revendication 6, **caractérisé en ce que** chacune des paires de galets de support (46, 48) associées aux deux rails de guidage différents (12, 14) est connectée par le biais d'un élément de force respectif (40).

8. Dispositif selon la revendication 6, **caractérisé en ce que** le support de module (16) se compose de deux parties de support connectées par le biais d'un élément de force (40).

9. Dispositif selon l'une quelconque des revendications 1 à 8, **caractérisé en ce qu'**au moins une came d'entraînement (54, 56) de préférence à ressort, pouvant être amenée en prise avec le moyen d'entraînement (52), de préférence avec une courroie dentée, est disposée sur le module de transport (10).

10. Dispositif selon la revendication 9, **caractérisé en ce que** l'au moins une came d'entraînement (54, 56) peut être déplacée par rapport au module de transport (10) essentiellement perpendiculairement au moyen d'entraînement (52) et peut être amenée en prise par le biais d'au moins un élément de force (66) avec le moyen d'entraînement (52).

11. Dispositif selon la revendication 9 ou 10, **caractérisé en ce que** pour compenser la plus petite distance dans un segment de came (30) par rapport à un segment linéaire (32) d'un pourtour circulaire (50) entre l'au moins une came d'entraînement (54, 56) et le moyen d'entraînement (52) dans le segment de came (30), le centre (Z_{Zr}) du moyen d'entraînement (52) peut être déplacé à l'écart du segment de came (30) d'une mesure (v) vers le centre (Z_{Fs}) des rails de guidage (12, 14), en particulier parallèlement à la bissectrice de l'angle ou aux axes centraux des segments linéaires (32) se raccordant au segment de came (30).

12. Dispositif selon l'une quelconque des revendications 9 à 11, **caractérisé en ce que** lesdites cames d'entraînement à ressort (54, 56) sont disposées par paires les unes à côté des autres.

13. Dispositif selon l'une quelconque des revendications 9 à 11, **caractérisé en ce qu'**à chaque fois au moins deux, de préférence exactement deux cames d'entraînement (54a, 54b ; 56a, 56b) sont prévues pour chaque point d'engagement dans le moyen d'entraînement (52).

14. Dispositif selon l'une quelconque des revendications 9 à 13, **caractérisé en ce que** les cames d'entraînement (54a, 54b ; 56a, 56b) présentent un biseautage (78) pour faciliter le positionnement de la came d'entraînement (54, 56) par rapport au moyen d'entraînement (52).

15. Dispositif selon l'une quelconque des revendications 9 à 13, **caractérisé en ce que** les cames d'entraînement (54a, 54b ; 56a, 56b) sont réalisées de manière plus étroite que l'espace entre les dents (74), de telle sorte que lorsque les cames d'entraînement (54a, 54b ; 56a, 56b) pénètrent dans l'espace entre les dents (74), il existe chaque fois un jeu entre la came d'entraînement (54a, 54b ; 56a, 56b) et la dent, et dès que les deux cames d'entraînement sont correctement en prise, la position est fixée.
